# EUROPÄISCHE PATENTANMELDUNG

(11) **EP 0 798 087 A1**
(43) Veröffentlichungstag der Anmeldung: **01.10.1997**
(21) Anmeldenummer: 97104757.6
(22) Anmeldetag: 20.03.1997
(51) Int. Cl.: B27K 3/38, B27K 3/50

(54) **Holzschutzmittel**

(30) Priorität: 26.03.1996 DE 19611825
(71) Anmelder: DESOWAG GmbH, D-40476 Düsseldorf (DE)
(72) Erfinder: Hiller, Johannes Christian, Dr., 41564 Kaarst (DE); Höllbacher, Günther, Dr., 47804 Krefeld (DE); Wegen, Hans Werner, Dr., 47800 Krefeld (DE); Wüstenhöfer, Bettina, Dr., 47803 Krefeld (DE); Adams, Susanne, Dipl.-Biol., 53115 Bonn (DE); Gossmann, Katrin, Dipl.-Biol., 53225 Bonn (DE); Kunz, Benno, Prof. Dr., 53340 Meckenheim (DE); Martini, Heike, Dipl.-Chem., 53111 Bonn (DE); Weidenbörner, Martin, Dr., 53229 Bonn (DE); Grohs, Birgit-Maria, Dr. rer. nat., 53175 Bonn (DE)
(74) Vertreter: Sparing - Röhl - Henseler Patentanwälte

(57) **Zusammenfassung**

Die Erfindung betrifft ein Holzschutzmittel umfassend ein oder mehrere, pflanzliche Inhaltsstoffe darstellende Phenolderivate, substituiert mit einem oder mehreren Alkyl- und/oder Alken- und/oder Alkoxyresten mit bis zu drei Kohlenstoffatomen, in einer zur unmittelbaren Inaktivierung von Pilzsporen ausreichenden Wirkstoffmenge in Mischung mit einem Mittel mit mindestens fungistatischer Wirkung zur Inhibierung rekontaminierender Pilzsporen.

## Beschreibung

Die Erfindung betrifft ein Holzschutzmittel nach dem Oberbegriff des Anspruchs 1.

Chemische Holzschutzmittel mit einem breiten Wirkungsspektrum gegen Holzschädlinge wie insbesondere gegen Bläuepilze sind bekannt. So ist z.B. aus DE 41 00 376 A1 ein Mittel gegen holzverfärbende Pilze aus einer Mischung aus o-Phenylphenol und 2-Ethylhexansäure in einem unpolaren oder polaren organisch-chemischen Lösungsmittel bzw. -gemisch und/oder Wasser und mindestens einem Emulgator und/oder Netzmittel bekannt. Jedoch sind diese Holzschutzmittel aus toxikologischer wie auch ökotoxikologischer Sicht zunehmender Kritik ausgesetzt. Zur Zeit werden daher diverse sogenannte biologische Verfahren oder Mittel zur Vermeidung eines Pilzbefalls auf Holz erforscht bzw. angewendet.

So können beispielsweise antagonistische Bakterien zum Schutz gegen holzzerstörende Pilze eingesetzt werden (vgl. Häfner, B., Krebs, B., Ockhardt, A., Biotechnische Möglichkeiten im Holzschutz: Antagonistische Bakterien und deren Wirksubstanzen zum Schutz gegen holzzerstörende Pilze, 20. Holzschutztagung 1995, Rosenheim, 121-131, Hrgs. DGFH, und Loeffler, W., Katzer, W., Kremer, S., Gegen Pilze wirksame Antibiotika der Bacillus subtilis Gruppe, Forum Mikrobiol. 3, 156-163, 1990). Da es sich hierbei um lebende Organismen handelt und diese durch beispielsweise ungünstige Witterungseinflüsse absterben können, ist die Langzeitwirkung eines solchen Mittels jedoch fraglich.

Weiterhin ist es bekannt, den Pilz Trichoderma harzianum als Wirkstoff gegen holzzerstörende Pilze einzusetzen (vgl. AT 397 811 B sowie Messner, K. et al. Stand der technischen Entwicklung des biologischen Holzschutzverfahrens LCT, 20. Holzschutztagung 1995, Rosenheim, 111-119, Hergs. DGFH). Auch hier gilt als Voraussetzung für die Langzeitwirkung das Überleben des Organismus selbst bei extremen Witterungsbedingungen. Zudem ist das Wirkungsspektrum dadurch eingeschränkt, daß dieses Mittel nur gegen Braunfäulepilze einsetzbar ist. Gegenüber Schimmelpilzen zeigt es lediglich eine schwache oder keine Wirkung. Daher ist die Nutzung dieses Mittels auf Nadelholz begrenzt, das hauptsächlich durch Braunfäulepilze geschädigt wird. Aus toxikologischer Sicht ist keineswegs gesichert, ob die unweigerlich sich bildenden Sporen von Trichoderma harzianum keine allergischen Reaktionen verursachen.

Neben der Verwendung umweltfreundlicher Holzschutzmittel besteht die Möglichkeit der chemischen Modifizierung bzw. Zellwandmodifizierung, so daß der Abbau des Holzes durch die Enzyme der Schädlinge nicht mehr gewährleistet ist (vgl. EP 0 213 252 A1 sowie Militz, H., Beckers, E., Holzmodifizierung - Neue Wege des Holzschutzes, 20. Holzschutztagung 1995, Rosenheim, 275-294, Hrsg. DGFH und Larsson, P., Tillman, A.-M., Acetylation of Wood Using Micro-wave Heating, International Chemical Congress of Pacific Basin Societies, Honolulu, Hawaii, 1989). Bei diesem Behandlungsverfahren sind Katalysatoren und/oder hohe Temperaturen erforderlich. Beides kann zu einem unerwünschten Abbau von Zellpolymeren führen. Daneben entstehen hohe Kosten wegen der erforderlichen großen Tränkanlagen.

Aufgabe der Erfindung ist es, ein Holzschutzmittel insbesondere gegen Bläuebefall von Schnittholz nach dem Oberbegriff des Anspruchs 1 zu schaffen, das umweltschonend ist und in seiner Wirkung holzkonservierenden chemischen Holzschutzmitteln vergleichbar ist.

Diese Aufgabe wird durch ein Holzschutzmittel umfassend ein oder mehrere, pflanzliche Inhaltsstoffe darstellende Phenolderivate, substituiert mit einem oder mehreren Alkyl- und/oder Alken- und/oder Alkoxyresten mit bis zu drei Kohlenstoffatomen, in einer zur unmittelbaren Inaktivierung von Pilzsporen ausreichenden Wirkstoffmenge in Mischung mit einem Mittel mit mindestens fungistatischer Wirkung zur Inhibierung rekontaminierender Pilzsporen gelöst.

Hierdurch wird ein biologisches Holzschutzmittel durch Zusammenstellung pflanzlicher Rohmaterialien geschaffen, bei dem die Phenolderivate, insbesondere Eugenol und/oder Carvacrol und/oder Zimtaldehyd, zu einer unmittelbaren Inaktivierung von Pilzsporen auf der Holzoberfläche führen. Allerdings sind diese Phenolderivate relativ leicht flüchtig und zur Inhibierung rekontaminierender Pilzsporen werden diese mit einem Mittel mit fungistatischer bzw. fungizider Wirkung kombiniert.

Bei letzteren handelt es sich um stabile Substanzen, vorzugsweise Zimtsäure, o-Cumarsäure, p-Cumarsäure, Cumarin, Cumarin-3-carbonsäure, Ferulasäure, Salicylsäure, Gerbstoffe und Flavonoide, die insbesondere in Kombination mit Eugenol und/oder Carvacrol und/oder einer anderen der genannten Substanzen synergistische Effekte zeigen, so daß sich eine gesteigerte Langzeitwirkung gegenüber Pilzsporen ergibt. Insbesondere werden Kombinationen Zimtsäure/o-Cumarsäure, Zimtsäure/Cumarin-3-carbonsäure, Zimtsäure/p-Cumarsäure, Eugenol/Zimtsäure, Eugenol/p-Cumarsäure und Eugenol/Cumarin bevorzugt.

Bei sämtlichen als Inhaltsstoffe aufgeführten Substanzen dieses Holzschutzmittels handelt es sich prinzipiell um nachwachsende Rohstoffe mit potentiell leichter Abbaubarkeit, womit eine kostspielige Entsorgung entfällt.

Die Substanzen können sowohl als aus Pflanzen isolierte oder als synthetisierte Reinsubstanzen als auch in pflanzlichen Aufbereitungsformen, etwa in Form von Pflanzenextrakten, vorliegen. Als Extraktionsmittel und ebenso als Lösungsmittel bzw. -gemisch kommen beispielsweise Ethanol, Methanol, Wasser, Essigsäure/Ethanol, Essigsäure/Methanol infrage.

### Beispiel 1

Ein Gemisch aus 135 mg Eugenol (Vorkommen: Etherisches Öl der Gewürznelke), 150 mg Zimtsäure (Vorkommen: Zimtrinde), 328 mg p-Cumarsäure (Vorkommen: Stiefmütterchenkraut, Weidenrinde) als Reinsubstanzen mit 400 ml Ethanol als Lösungsmittel wird hergestellt.

Das Gemisch wird auf Schnittholz aufgebracht, das mit Bläuepilzsporen (Aureobasidium pullulans) kontaminiert ist. Das Schnittholz ist über den festgelegten Kontrollzeitraum von drei Wochen zu 100% (Aureobasidium pullulans) kontaminationsfrei.

### Vergleichsbeispiel 1

Ein Gemisch aus 135 mg Eugenol und 400 ml Ethanol als Lösungsmittel wird hergestellt und gemäß Beispiel 1 verwendet.

Die vorhandenen Bläuepilzsporen (Aureobasidium pullulans) werden über den Kontrollzeitraum von drei Wochen zu 42% inaktiviert.

### Vergleichsbeispiel 2

Ein Gemisch aus 150 mg Zimtsäure und 400 ml Ethanol als Lösungsmittel wird hergestellt und gemäß Beispiel 1 verwendet.

Die vorhandenen Bläuepilzsporen (Aureobasidium pullulans) werden über den Kontrollzeitraum von drei Wochen nicht inaktiviert.

### Vergleichsbeispiel 3

Ein Gemisch aus 328 mg p-Cumarsäure und 400 ml Ethanol als Lösungsmittel wird hergestellt und gemäß Beispiel 1 verwendet.

Die vorhandenen Bläuepilzsporen (Aureobasidium pullulans) werden über den Kontrollzeitraum von drei Wochen zu 15% inaktiviert.

### Vergleichsbeispiel 4

Ein Gemisch aus 135 mg Eugenol, 150 mg Zimtsäure und 400 ml Ethanol als Lösungsmittel wird hergestellt und gemäß Beispiel 1 verwendet.

Die vorhandenen Bläuepilzsporen (Aureobasidium pullulans) werden über den Kontrollzeitraum von drei Wochen zu 83% inaktiviert.

### Vergleichsbeispiel 5

Ein Gemisch aus 135 mg Eugenol, 328 mg p-Cumarsäure und 400 ml Ethanol als Lösungsmittel wird hergestellt und gemäß Beispiel 1 verwendet.

Die vorhandenen Bläuepilzsporen (Aureobasidium pullulans) werden über den Kontrollzeitraum von drei Wochen zu 62% inaktiviert.

### Vergleichsbeispiel 6

Ein Gemisch aus 150 mg Zimtsäure, 328 mg p-Cumarsäure und 400 ml Ethanol als Lösungsmittel wird hergestellt und gemäß Beispiel 1 verwendet.

Die vorhandenen Bläuepilzsporen (Aureobasidium pullulans) werden über den Kontrollzeitraum von drei Wochen zu 77% inaktiviert.

Aus Beispiel 1 und den zugehörigen Vergleichsbeispielen 1 bis 6 ergibt sich, daß durch die Kombination Eugenol/Zimtsäure/p-Cumarsäure ein synergistischer Effekt von 43% zum Tragen kommt. Daneben beträgt der synergistische Effekt bei der Kombination Eugenol/Zimtsäure 41% und bei der Kombination Zimtsäure/p-Cumarsäure 62%.

### Beispiel 2

Ein Gemisch aus 135 mg Eugenol (Vorkommen: Etherisches Öl der Gewürznelke), 150 mg Zimtsäure (Vorkommen: Zimtrinde), 328 mg o-Cumarsäure (Vorkommen: Stiefmütterchenkraut, Weidenrinde) als Reinsubstanzen mit 400 ml Ethanol als Lösungsmittel wird hergestellt.

Das Gemisch wird auf Schnittholz aufgebracht, das mit Bläuepilzsporen (Aureobasidium pullulans, Ceratocystis fimbriata) kontaminiert ist. Das Schnittholz ist über den festgelegten Kontrollzeitraum von drei Wochen zu 100% (Aureobasidium pullulans) bzw. 77% (Ceratocystis fimbriata) kontaminationsfrei.

### Vergleichsbeispiel 1

Ein Gemisch aus 135 mg Eugenol und 400 ml Ethanol als Lösungsmittel wird hergestellt und gemäß Beispiel 2 verwendet.

Die vorhandenen Bläuepilzsporen werden über den Kontrollzeitraum von drei Wochen zu 42% (Aureobasidium pullulans) bzw. 65% (Ceratocystis fimbriata) inaktiviert.

### Vergleichsbeispiel 2

Ein Gemisch aus 150 mg Zimtsäure und 400 ml Ethanol als Lösungsmittel wird hergestellt und gemäß Beispiel 2 verwendet.

Die vorhandenen Bläuepilzsporen werden über den Kontrollzeitraum von drei Wochen nicht (Aureobasidium pullulans) bzw. zu 20% (Ceratocystis fimbriata) inaktiviert.

### Vergleichsbeispiel 3

Ein Gemisch aus 328 mg o-Cumarsäure und 400 ml Ethanol als Lösungsmittel wird hergestellt und gemäß Beispiel 2 verwendet.

Die vorhandenen Bläuepilzsporen werden über den Kontrollzeitraum von drei Wochen zu 53% (Aureobasidium pullulans) bzw. 32% (Ceratocystis fimbriata) inaktiviert.

### Vergleichsbeispiel 4

Ein Gemisch aus 135 mg Eugenol, 150 mg Zimtsäure und 400 ml Ethanol als Lösungsmittel wird hergestellt und gemäß Beispiel 2 verwendet.

Die vorhandenen Bläuepilzsporen werden über den Kontrollzeitraum von drei Wochen zu 83% (Aureobasidium pullulans) bzw. 100% (Ceratocystis fimbriata) inaktiviert.

### Vergleichsbeispiel 5

Ein Gemisch aus 135 mg Eugenol, 328 mg o-Cumarsäure und 400 ml Ethanol als Lösungsmittel wird hergestellt und gemäß Beispiel 2 verwendet.

Die vorhandenen Bläuepilzsporen werden über den Kontrollzeitraum von drei Wochen zu 68% (Aureobasidium pullulans, Ceratocystis fimbriata) inaktiviert.

### Vergleichsbeispiel 6

Ein Gemisch aus 150 mg Zimtsäure, 328 mg o-Cumarsäure und 400 ml Ethanol als Lösungsmittel wird hergestellt und gemäß Beispiel 2 verwendet.

Die vorhandenen Bläuepilzsporen werden über den Kontrollzeitraum von drei Wochen zu 92% (Aureobasidium pullulans) bzw. 96% (Ceratocystis fimbriata) inaktiviert.

Aus Beispiel 2 und den zugehörigen Vergleichsbeispielen 1 bis 6 ergibt sich, daß die Kombination Eugenol/Zimtsäure einen synergistischen Effekt von 41% (Aureobasidium pullulans) bzw. 15% (Ceratocystis fimbriata) liefert. Daneben beträgt der synergistische Effekt bei der Kombination Zimtsäure/o-Cumarsäure 39% (Aureobasidium pullulans) bzw. 44% (Ceratocystis fimbriata).

### Beispiel 3

Ein Gemisch aus 135 mg Eugenol (Vorkommen: Etherisches Öl der Gewürznelke), 300 mg Cumarin (Vorkommen: Bibernellwurzel) als Reinsubstanzen mit 400 ml Ethanol als Lösungsmittel wird hergestellt.

Das Gemisch wird auf Schnittholz aufgebracht, das mit Bläuepilzsporen (Penicillium glabrum) kontaminiert ist. Das Schnittholz ist über den festgelegten Kontrollzeitraum von drei Wochen zu 60% (Penicillium glabrum) kontaminationsfrei.

### Vergleichsbeispiel 1

Ein Gemisch aus 135 mg Eugenol und 400 ml Ethanol als Lösungsmittel wird hergestellt und gemäß Beispiel 3 verwendet.

Die vorhandenen Bläuepilzsporen (Penicillium glabrum) werden über den Kontrollzeitraum von drei Wochen zu 20% inaktiviert.

### Vergleichsbeispiel 2

Ein Gemisch aus 300 mg Cumarin und 400 ml Ethanol als Lösungsmittel wird hergestellt und gemäß Beispiel 3 verwendet.

Die vorhandenen Bläuepilzsporen (Penicillium glabrum) werden über den Kontrollzeitraum von drei Wochen zu 19% inaktiviert.

Aus Beispiel 3 und den zugehörigen Vergleichsbeispielen 1 und 2 ergibt sich, daß durch die Kombination Eugenol/Cumarin ein synergistischer Effekt von 21% (Penicillium glabrum) zum Tragen kommt.

## Patentansprüche

1. Holzschutzmittel auf Phenolderivatbasis mit einem Lösungsmittel, **gekennzeichnet** durch ein oder mehrere, pflanzliche Inhaltsstoffe darstellende Phenolderivate, substituiert mit einem oder mehreren Alkyl- und/oder Alken- und/oder Alkoxyresten mit bis zu drei Kohlenstoffatomen, in einer zur unmittelbaren Inaktivierung von Pilzsporen ausreichenden Wirkstoffmenge in Mischung mit einem Mittel mit mindestens fungistatischer Wirkung zur Inhibierung rekontaminierender Pilzsporen.

2. Holzschutzmittel nach Anspruch 1, dadurch gekennzeichnet, daß das Phenolderivat Eugenol und/oder Carvacrol und/oder Zimtaldehyd ist.

3. Holzschutzmittel nach Anspruch 1 oder 2, dadurch gekennzeichnet, daß das Mittel mit mindestens fungistatischer Wirkung eine Substanzkombination aus pflanzlichen Inhaltsstoffen mit synergistischer Wirkung ist.

4. Holzschutzmittel nach Anspruch 3, dadurch gekennzeichnet, daß das Mittel mit mindestens fungistatischer Wirkung Zimtsäure oder ein Zimtsäurederivat in Kombination mit Eugenol und/oder einem anderen Zimtsäurederivat ist.

5. Holzschutzmittel nach einem der Ansprüche 1 bis 4, dadurch gekennzeichnet, daß die pflanzlichen Inhaltsstoffe isolierte Reinsubstanzen sind.

6. Holzschutzmittel nach einem der Ansprüche 1 bis 4, dadurch gekennzeichnet, daß die pflanzlichen Inhaltsstoffe Pflanzenextrakte sind.
